# EUROPÄISCHE PATENTSCHRIFT

(11) **EP 2 581 177 B1**
(45) Veröffentlichungstag und Bekanntmachung des Hinweises auf die Patenterteilung: **16.02.2022**
(21) Anmeldenummer: 12186961.4
(22) Anmeldetag: 02.10.2012
(51) Int. Cl.: B25J 9/16, G05B 19/402

(54) **Robotersteuerungsverfahren**
Robot control method
Procédé de commande de robot

(30) Priorität: 13.10.2011 DE 102011084412
(43) Veröffentlichungstag der Anmeldung: 17.04.2013
(73) Patentinhaber: KUKA Deutschland GmbH, 86165 Augsburg (DE)
(72) Erfinder: Hüttenhofer, Manfred, 86405 Meitingen (DE)
(74) Vertreter: Böss, Dieter Alexander

(56) Entgegenhaltungen:
- EP-A1- 0 940 366
- US-A- 4 954 762
- OGREN P ET AL: "Reactive mobile manipulation using dynamic trajectory tracking design and implementation", PROCEEDINGS OF THE 39TH IEEE CONFERENCE ON DECISION AND CONTROL : DECEMBER 12 - 15, 2000, SYDNEY CONVENTION AND EXHIBITION CENTRE, SYDNEY, AUSTRALIA, IEEE CUSTOMER SERVICE, PISCATAWAY, NJ, USA, Bd. 3, 12. Dezember 2000 (2000-12-12), Seiten 3001-3006, XP010537086, ISBN: 978-0-7803-6638-1
- YAMAMOTO Y ET AL: "Coordinating locomotion and manipulation of a mobile manipulator", PROCEEDINGS OF THE CONFERENCE ON DECISION AND CONTROL. TUCSON, DEC. 16 - 18, 19; [PROCEEDINGS OF THE CONFERENCE ON DECISION AND CONTROL], NEW YORK, IEEE, US, Bd. CONF. 31, 16. Dezember 1992 (1992-12-16), Seiten 2643-2648, XP010107850, ISBN: 978-0-7803-0872-5
- G. Schreiber Et Al.: "Steuerung für redundante Robotersysteme: Benutzer- und aufgabenorientierte Verwendung der Redundanz", , 1. Januar 2004 (2004-01-01), XP055308069, DOI: 10.18419/opus-6562 Gefunden im Internet: URL:https://elib.uni-stuttgart.de/bitstrea m/11682/6579/1/schreiberDiss.pdf [gefunden am 2016-10-06]
- Ronald C Arkin ET AL: "Planning to Behave: A Hybrid DeliberativeeReactive Robot Control Architecture for Mobile Manipulation", ISRAM'94, 31. Dezember 1994 (1994-12-31), XP055416483, Gefunden im Internet: URL:https://www.cc.gatech.edu/ai/robot-lab /online-publications/ISRMA94.pdf [gefunden am 2017-10-17]

## Beschreibung

Die Erfindung betrifft ein Robotersteuerungsverfahren, bei dem Zielwerte eines in Position und Orientierung durch ein Roboterprogramm vorgegebenen Arbeitspunktes vorgeben werden, in dessen programmierter Abhängigkeit ein Werkzeugbezugspunkt eines Manipulators durch automatisches Bewegen von Achsen des Manipulators durch eine mit dem Manipulator verbundene Robotersteuerung einzustellen ist. Bei der Erfindung wird von Stellungswerten einer geplanten einzunehmenden Position und Orientierung einer durch eine Zusatzachse verstellbaren Roboterbasis ausgegangen, die durch das Roboterprogramm vorgegeben sind.

Die EP 0 271 691 A1 beschreibt ein Verfahren zum Steuern der dreidimensionalen Relativbewegung eines Roboters, dem ein auf den Fußpunkt des Roboters bezogenes Roboter-Koordinatensystem zugeordnet ist, gegenüber einem in einer beliebigen festen räumlichen Zuordnung an einem Werkstückträger befestigten Werkstück, wobei die Bahn der Relativbewegung durch signifikante Raumpunkte bestimmbar ist. Dabei können sich bewegende Werkstücke beispielsweise auf beweglichen Tischen, wie Dreh- oder Dreh-Schwenk-Tischen angeordnet sein oder aber der Roboter selbst kann verfahrbar angeordnet sein, sei es, dass er an einem Portal befestigt ist, sei es, dass er mit einem Fahrgestell ausgerüstet ist. Das Werkstück kann sowohl stationär gehalten sein oder eine eigene Zustellbewegung ausführen. Gemäß diesem Stand der Technik können die in einem Zusatzachsen-Koordinatensystem vorliegenden Raumpunkte über eine die Zustellbewegung berücksichtigende Transformationsbedingung unmittelbar in ein Roboter-Koordinatensystem übertragen werden.

Das Dokument ÖGREN P ET AL, "Reactive Mobile Manipulation using Dynamic Trajectory Tracking: Design and Implementation", Proceedings of the 39th IEEE Conference on Decision and Control, Sydney Australia, December 2000, beschreibt einen Roboterarm mit einer Basis, die mittels einer mobilen Plattform ortsbeweglich ist. Dabei wird der Roboterarm durch eine eigene Steuervorrichtung mit einem Echtzeit-Betriebssystem QNX gesteuert und die mobile Plattform von einer separaten Steuervorrichtung mit einem nicht-echtzeitfähigen Linux-Betriebssystem gesteuert. Dabei sind auch die in C++ geschriebenen Programme der beiden verschiedenen Software-Applikationen getrennt voneinander ausgebildet.

Das Dokument YAMAMOTO Y ET AL, "Coordinating Locomotion and Manipulation of a Mobile Manipulator", Proceedings of the 31th IEEE Conference on Decision and Control, Tucson Arizona USA, December 1992, beschreibt einen Roboterarm, der auf einer mobilen Plattform montiert ist. Dieses Dokument befasst sich mit Szenario eines manuellen Führens des mobilen Roboters, indem beispielsweise der Endflansch des Roboterarms von einer Person mit der Hand gegriffen wird und der mobile Roboter so geführt wird.

Das Dokument EP 0 940 366 A1 betrifft ein Straßenfahrzeug mit einem teleskopierbaren Ausleger, an dessen Ende zwei Roboterarme angeordnet sind, die mittels eines Bediengeräts manuell durch eine Person gesteuert werden.

Das Dokument G. SCHREIBER, "Steuerung für redundante Robotersysteme: Benutzer- und aufgabenorientierte Verwendung der Redundanz", Dissertation an der Fakultät Maschinenbau der Universität Stuttgart, Oktober 2004, beschreibt eine Benutzer- und aufgabenorientierte Verwendung der Redundanz zur Steuerung für redundante Robotersysteme. Darin werden zwar Möglichkeiten einer Nullraumbeeinflussung eines redundanten Roboterarms beschrieben.

Aufgabe der Erfindung ist es, ein Robotersteuerungsverfahren mit erweiterten Bewegungsformen anzugeben.

Die Aufgabe wird gelöst durch ein Robotersteuerungsverfahren aufweisend die folgenden Schritte:
- Vorgeben von Zielwerten eines in Position und Orientierung durch ein Roboterprogramm vorgegebenen Arbeitspunktes, in dessen programmierter Abhängigkeit ein Werkzeugbezugspunkt eines Manipulators durch automatisches Bewegen von Achsen des Manipulators durch eine mit dem Manipulator verbundene Robotersteuerung einzustellen ist;
- Ausgehend von durch das Roboterprogramm vorgegebenen, einer geplanten einzunehmenden Position und Orientierung entsprechenden Stellungswerten einer durch eine Zusatzachse verstellbaren Roboterbasis, wobei die Stellungswerte auf einen Nullpunkt der Zusatzachse bezogen sind, automatisches Ändern des Nullpunktes der Zusatzachse derart, dass eine tatsächlich einzunehmende Position der Roboterbasis an den Arbeitspunkt angenähert ist;
- automatisches Bewegen der Zusatzachse derart, dass die Roboterbasis die Position und Orientierung einnimmt, die den vorgegebenen Stellungswerten und dem geänderten Nullpunkt entspricht;
- wobei der Nullpunkt der Zusatzachse derart automatisch geändert wird, dass die tatsächlich einzunehmende Position der Roboterbasis an einen Arbeitspunkt, der ein gegenüber dem durch das Roboterprogramm vorgegebenen Arbeitspunkt geänderter Arbeitspunkt ist, der mit den durch das Roboterprogramm vorgegebenen Stellungswerten nicht mehr durch den Manipulator erreicht werden kann, dadurch angenähert wird, dass die vorgegebenen Stellungswerte einer geplanten einzunehmenden Position und Orientierung der durch die Zusatzachse verstellbaren Roboterbasis beibehalten werden;
- auf Grundlage der Stellungswerte der Position und Orientierung der Roboterbasis und auf Grundlage der durch das Roboterprogramm vorgegebenen Zielwerte des vorgegebenen Arbeitspunkts, automatisches Rückrechnen von Achswerten der Achsen des Manipulators, die den Stellungswerten der Roboterbasis und in Abhängigkeit des Bezugspunktes programmierten Anfahrwerten des Werkzeugbezugspunktes entsprechen; und
- Bewegen von Gliedern des Manipulators durch Einstellen der Achsen des Manipulators auf die rückgerechneten Achswerte mittels der mit dem Manipulator verbundenen Steuerungsvorrichtung.

Die Zielwerte können in kartesischen Koordinaten vorgegeben sein und im dreidimensionalen Raum die drei Positionskoordinaten x, y, z und die drei Orientierungskoordinaten A, B, C umfassen. Die Zielwerte können insbesondere in einem in Textform vorliegenden Roboterprogramm vorgegeben sein. Das Roboterprogramm enthält Vorschriften darüber, wie ein Manipulator sich in einem zeitlichen Ablauf zu bewegen hat. Der Manipulator kann ein Manipulatorarm sein, insbesondere mit 4 bis 7 Achsen, die beispielsweise als Drehachsen ausgebildet sein können. Der Manipulator wird von einer Robotersteuerung bewegt. Die Robotersteuerung kann den Manipulator insbesondere automatisch gemäß den Vorschriften des Roboterprogramms bewegen.

Der Arbeitspunkt steht repräsentativ für einen oder mehrere Arbeitspunkte, die in dem Roboterprogramm vorgegeben sein können. Ein Arbeitspunkt kann beispielsweise ein Punkt auf einer Oberfläche eines vom Roboter zu bearbeitenden oder handzuhabenden Werkstücks sein. Beispielsweise kann der Arbeitspunkt eine Stelle an einer Rohkarosserie eines Kraftfahrzeuges sein, an der ein Schweißpunkt mittels einer von dem Manipulator gehaltenen bzw. bewegten Schweißzange angebracht werden soll. Die Schweißzange ist dabei ein Beispiel eines Werkzeugs, das von dem Manipulator bewegt wird. Mehrere Arbeitspunkte können diskrete Orte darstellen, die nacheinander von dem Manipulator bzw. des vom Manipulator getragenen Werkzeugs anzufahren sind. Die mehreren Arbeitspunkte können jedoch auch Stützpunkte einer kontinuierlichen Bahn auf dem Werkstück sein, entlang welcher Bahn der Manipulator bzw. das vom Manipulator getragene Werkzeug entlangfahren soll. Der Arbeitspunkt, bzw. die Arbeitspunkte oder die Bahn muss dabei nicht notwendiger Weise auf der Oberfläche des Werkstücks liegen, vielmehr können diese auch virtuelle Punkte oder Bahnen im Raum sein. Dies ist beispielsweise dann der Fall, wenn das Werkstück berührungslos bearbeitet werden soll, wie beispielsweise beim Lackieren eines Bauteils mittels einer vom Manipulator bewegten Lacksprühpistole.

Generell werden die Zielwerte der Arbeitspunkte in Koordinaten zu einem werkstück- bzw. bauteilfesten Bezugssystem, d.h. einem werkstückgebundenen Basiskoordinatensystem angegeben. Der die Zielwerte repräsentierende Ort soll im Allgemeinen von einem Werkzeugbezugspunkt des Manipulators direkt angefahren werden, oder der Werkzeugbezugspunkt des Manipulators soll in einer festen programmierten Abhängigkeit relativ zu diesem Ort positioniert und/oder ausgerichtet werden, d.h. bezüglich diesem Ort gestellt werden. Der Werkzeugbezugspunkt des Manipulators wird insbesondere in einem Roboterprogramm jedoch nicht in dem werkstück- bzw. bauteilfesten Bezugssystem angegeben, sondern in einem robotereigenen Bezugssystem d.h. einem robotergebundenen Koordinatensystem, das auch als Roboterkoordinatensystem bezeichnet wird. Das Roboterkoordinatensystem wird dabei generell fest bezüglich einer Roboterbasis angegeben. Die Roboterbasis kann beispielsweise ein Grundgestellt eines Manipulators, insbesondere eines Manipulatorarms sein.

Ist das Werkstück und die Roboterbasis fest installiert, so besteht eine konstante Beziehung zwischen dem werkstück- bzw. bauteilfesten Basiskoordinatensystem und dem roboterbasisfesten Roboterkoordinatensystem. Diese Beziehung von werkstück- bzw. bauteilfesten Basiskoordinatensystem zu roboterbasisfesten Roboterkoordinatensystem kann über ein weiteres allgemeines Bezugssystem, einem Weltkoordinatensystem definiert sein.

Erfindungsgemäß ist jedoch vorgesehen, dass der Manipulator, insbesondere die Roboterbasis und/oder das Werkstück, insbesondere ein Arbeitspunkt nicht fest im Raum steht, sondern dass der Manipulator, insbesondere die Roboterbasis und/oder das Werkstück, insbesondere der Arbeitspunkt automatisch verstellbar ist, d.h. die Position und/oder Orientierung der Roboterbasis zum Werkstück kann sich verändern. Dies geschieht üblicher Weise durch eine Zusatzachse. Eine Zusatzachse steht einer Bewegungsvorrichtung gleich, welche ausgebildet ist, den Manipulator, insbesondere die Roboterbasis und/oder das Werkstück, insbesondere der Arbeitspunkt automatisch zu bewegen. Dabei kann es sich beispielsweise um einen Verfahrwagen oder eine Linearachse handeln, auf welchem beispielsweise der Manipulator montiert ist, so dass der Manipulator entlang einer Verfahrachse beispielsweise eindimensional verfahren werden kann. Gegebenenfalls kann der Verfahrwagen auch zwei Freiheitsgrade aufweisen, d.h. es kann sich um ein Fahrzeug handeln, das nicht schienengebunden, sondern in einer Ebene frei bewegt werden kann. Alternativ oder ergänzend kann es sich bei einer Zusatzachse auch um einen zusätzlichen Freiheitsgrad bei der Bewegung des Werkstücks handeln. Beispielsweise kann das Werkstück auf einem drehbaren und/oder kippbaren Tisch befestigt sein oder translatorisch beispielsweise auf einem Fließband oder Gehänge bewegt werden.

Eine automatische Änderung der Stellungswerte kann unter rechnerischem Einbeziehen des vorgegebenen, programmierten Stellungswertes erfolgen. Eine automatische Änderung der Stellungswerte kann jedoch auch ohne Einbeziehen des vorgegebenen, programmierten Stellungswertes erfolgen. Insbesondere kann die Funktion des automatischen Änderns der Stellungswerte je nach Bedarf durch ein Roboterprogramm zugeschaltet und/oder abgeschaltet werden. Die Funktion des automatischen Änderns der Stellungswerte kann jedoch auch fest in der Robotersteuerung implementiert und unveränderbar sein.

Die Bewegung einer solchen Zusatzachse kann synchron oder asynchron zu einer Bewegung des Manipulators erfolgen. Synchron kann bedeuten, dass eine Bewegungssequenz des Manipulators und eine Bewegungssequenz der Zusatzachse gleichzeitig starten und gleichzeitig enden.

In einem grundsätzlichen, praktischen Anwendungsbeispiel kann es im Allgemeinen so sein, dass der Manipulator mit seiner Roboterbasis auf einem beweglichen Fahrgestell einer als Linearachse ausgebildeten Zusatzachse montiert ist. In einem zweiten grundsätzlichen, praktischen Anwendungsbeispiel kann es alternativ oder ergänzend zum ersten Anwendungsbeispiel im Allgemeinen so sein, dass ein Werkstück oder ein Werkstückträger auf einem Dreh- oder Dreh-Kipptisch als einfache oder zweifache Zusatzachse montiert ist.

In der Regel wird in Roboterprogrammen die gewünschte einzunehmende Position und Orientierung des Werkzeugbezugspunktes des Manipulators in kartesischen Koordinaten des durch Zielwerte vorgegebenen Arbeitspunktes in dem werkstückgebundenen Basiskoordinatensystem angegeben. Somit ist es für beide genannte praktische Anwendungsbeispiele wichtig, dass zur Berechnung der kartesischen Position und Orientierung die aktuelle Position und Orientierung der Roboterbasis und des Werkstücks berücksichtigt werden. Dies wird auch als aktive mathematische Kopplung zwischen Zusatzachse und Manipulator bezeichnet. Mit anderen Worten sind die jeweiligen Achsstellungen des Manipulators d.h. die Pose des Manipulators abhängig von dem aktuellen Stellungswert der Zusatzachse oder der Zusatzachsen.

Wird das Werkstück versetzt, kann es beispielsweise dazu kommen, dass die Position und Orientierung des durch das Roboterprogramm vorgegebenen Arbeitspunktes, in dessen programmierter Abhängigkeit der Werkzeugbezugspunkt des Manipulators durch automatisches Bewegen der Achsen des Manipulators durch die mit dem Manipulator verbundene Robotersteuerung einzustellen ist, nicht mehr durch den Manipulator erreicht werden kann. Erfindungsgemäß ist nun vorgesehen, dass ausgehend von den durch das Roboterprogramm vorgegebenen Stellungswerten der geplanten einzunehmenden Position und Orientierung der durch die Zusatzachse verstellbaren Roboterbasis, ein automatisches Ändern der Stellungswerte derart erfolgt, dass die tatsächlich einzunehmende Position der Roboterbasis gegenüber der geplanten einzunehmenden Position an den Arbeitspunkt angenähert ist. Mit anderen Worten wird durch automatisches Bewegen derjenigen Zusatzachse, durch welche die Roboterbasis verstellbar ist, die Roboterbasis auf den Arbeitspunkt automatisch zu bewegt, gegebenenfalls auch unabhängig davon, welcher Stellungswert der Zusatzachse durch das Roboterprogramm vorgegeben ist. Dies bedeutet, dass trotz einer Änderung des Arbeitspunktes der Werkzeugbezugspunkt des Manipulators den Arbeitspunkt erreichen kann, ohne dass eine manuelle Änderung des Roboterprogramms, insbesondere von vorgegebenen Punkten oder Bahnen durchgeführt werden muss. So kann beispielsweise ein Roboter, der auf einem Verfahrwagen, d.h. auf einem Fahrgestell einer Linearachse verfahrbar befestigt ist, ein sich bewegendes Werkstück, wie beispielsweise ein auf einem Förderband befindliches Bauteil bearbeiten, wobei der Werkzeugbezugspunkt des Manipulators dem Bauteil bzw. dem Werkstück nicht ausschließlich durch Ändern der Pose des Manipulators, d.h. durch Verstellen seiner Roboterachsen folgt, sondern dem Bauteil bzw. dem Werkstück auch unter Einbeziehen einer Bewegung der Zusatzachse, d.h. einer Bewegung der Roboterbasis folgen kann.

In einer erfindungsgemäßen Ausführungsform kann ein automatisches Ändern der Stellungswerte dadurch erfolgen, dass die tatsächlich einzunehmende Position der Roboterbasis gegenüber der geplanten einzunehmenden Position an einen vorbestimmten Bezugspunkt, insbesondere an den Arbeitspunkt oder an den Werkzeugbezugspunkt, dadurch angenähert wird, dass die vorgegebenen Stellungswerte einer auf einen Nullpunkt der Zusatzachse bezogene geplanten einzunehmenden Position und Orientierung der durch die Zusatzachse verstellbaren Roboterbasis beibehalten werden und ein automatisches Ändern der Stellungswerte dadurch erfolgt, dass der Nullpunkt der Zusatzachse geändert wird.

Der Nullpunkt einer Zusatzachse bedeutet dabei, die Position und Orientierung der Zusatzachse, welche die Zusatzachse einnimmt, wenn der Stellungswert - bei einer eindimensionalen Zusatzachse - oder die Stellungswerte - bei zwei oder mehrdimensionalen Zusatzachsen - der Zusatzachse im Roboterprogramm den Wert oder die Werte Null aufweisen.

Bezogen auf jegliche Ausführungsform der offenbarten Erfindung kann unter dem Merkmal, dass die tatsächlich einzunehmende Position der Roboterbasis gegenüber der geplanten einzunehmenden Position an einen vorbestimmten Bezugspunkt, insbesondere an den Arbeitspunkt oder an den Werkzeugbezugspunkt, angenähert ist, verstanden werden, dass ein Annähern tatsächlich ein Verkürzen des Abstandes von Position der Roboterbasis und Bezugspunkt ist. Wird jedoch nicht nur ein bestimmter Moment im Zeitablauf des Roboterprogramm betrachtet, so kann über einen längern Zeitablauf des Roboterprogramm betrachtet ein Annähern auch bedeutet, dass die tatsächlich einzunehmende Position der Roboterbasis lediglich im Mittel an den Arbeitspunkt angenähert ist, d.h. nur über den gesamten Bewegungsablauf betrachtet ein Verkürzen des Abstandes von Position der Roboterbasis und Bezugspunkt stattfindet.

So kann beispielsweise im Roboterprogramm vorgesehen sein, dass die Zusatzachse bzw. die darauf befindliche Roboterbasis eine beispielsweise gleichförmige schwingende Bewegung um einen mittleren Stellungswert, insbesondere dem Nullpunkt der Zusatzachse, ausführt. Erfindungsgemäß kann nun vorgesehen sein, dass diese durch das Roboterprogramm vorgesehene schwingende Bewegung beibehalten werden soll, wobei lediglich der mittlere Stellungswert, insbesondere der Nullpunkt, an den Bezugspunkt angenähert wird. In diesem Fall wird sich jedoch beispielsweise während der einen Halbschwingung die Roboterbasis tatsächlich nicht stets an den Bezugspunkt annähern, sondern mitunter in gewissen Zeitabschnitten auch wieder entfernen. Dies ist jedoch unschädlich, wenn sichergestellt ist, dass die Roboterbasis im Mittel, d.h. ein mittlere Stellungswert, insbesondere der Nullpunkt, an den Bezugspunkt angenähert wird.

Hierbei kann die die Roboterbasis bewegende Zusatzachse eine zur Bewegungssequenz des Manipulators synchrone Bewegung ausführen. Alternativ kann die Bewegung der Zusatzachse der Bewegungssequenz des Manipulators nachfolgen oder vorauseilen, wie dies nachfolgend noch detaillierter dargestellt ist.

Damit der Manipulator die durch das Roboterprogramm vorgegebenen Bewegungsmuster, beispielsweise ein Abfahren einer vorgegebenen Schweißbahn, unverändert durchführen kann, müssen die einzustellenden Achswerte des Manipulators aus den durch die Zusatzachse geänderten Stellungswerten der Position und Orientierung der Roboterbasis und aus den durch das Roboterprogramm vorgegebenen Zielwerten des Arbeitspunktes bzw. der Arbeitspunkte oder der Bahnstützpunkte automatisch rückgerechnet werden. Durch ein automatisches Rückrechnen der einzustellenden Achswerte des Manipulators entfällt die Notwendigkeit das Roboterprogramm, welches das Bewegungsmuster durch Arbeitspunkte in kartesischen Koordinaten vorgibt, umschreiben zu müssen.

Eine Möglichkeit der Rückrechnung kann bei einem erfindungsgemäßen Robotersteuerungsverfahren durch die Schritte erfolgen:
- auf Grundlage der geänderten Stellungswerte der Position und Orientierung der Roboterbasis und auf Grundlage der durch das Roboterprogramm vorgegebenen Zielwerte des Bezugspunktes, automatisches Rückrechnen von Achswerten der Achsen des Manipulators, die den geänderten Stellungswerten der Roboterbasis und in Abhängigkeit des Bezugspunktes programmierten Anfahrwerten des Werkzeugbezugspunktes entsprechen; und
- Bewegen von Gliedern des Manipulators durch Einstellen der Achsen des Manipulators auf die rückgerechneten Achswerte mittels der mit dem Manipulator verbundenen Steuerungsvorrichtung.

Eine rechnergestützte Implementierung des Robotersteuerungsverfahrens kann die folgenden Schritte aufweisen:
- Vorgeben eines Weltkoordinatensystems;
- Vorgeben einer Position und Orientierung eines werkstückgebundenen Basiskoordinatensystems eines Werkstücks in Weltkoordinaten des Weltkoordinatensystems;
- Vorgeben der Zielwerte in Basiskoordinaten des Basiskoordinatensystems;
- Vorgeben einer Position und Orientierung eines roboterbasisgebundene Roboterkoordinatensystems des Manipulators in Weltkoordinaten des Weltkoordinatensystems in Abhängigkeit einer Position und Orientierung der durch die Zusatzachse verstellbaren Roboterbasis;
- automatisches Rückrechnen der Achswerte der Achsen des Manipulators, aus der Position und Orientierung der Roboterbasis und der Zielwerte für die Position und Orientierung des Werkzeugbezugspunktes des Manipulators auf Grundlage einer Transformation der Zielwerte aus dem Basiskoordinatensystems über das Weltkoordinatensystem in das Roboterkoordinatensystem.

Die Position und Orientierung des Weltkoordinatensystems kann dabei in der Robotersteuerung fest vorgegeben sein. Das Basiskoordinatensystem ist starr zu einem Werkstück, Bauteil oder sonstigem Objekt, das durch den Manipulator beeinflusst, insbesondere bearbeitet oder gehandhabt werden soll. Das Basiskoordinatensystem muss dabei nicht zwingend unmittelbar an dem Werkstück liegen, sondern kann vielmehr auch räumlich getrennt, d.h. entfernt vom Werkstück, beispielsweise an einem Werkstückträger in einem festen Abstand und in einer festen Orientierung zum Werkstück liegen. Die Zielwerte sind beispielsweise programmierte und/oder gelehrte, d.h. in einem Teach-in-Verfahren gespeicherte Punkte in einem Roboterprogramm. Das Roboterkoordinatensystem kann beispielsweise räumlich innerhalb der Roboterbasis, beispielsweise in einem Robotergestell liegen. Der Werkzeugbezugspunkt kann beispielsweise ein Handwurzelpunkt eines Manipulatorarms, ein werkzeugspezifischer Punkt, der auch einen Tool-Center-Point (TCP) bilden kann, oder ein sonstiger, bezüglich des vom Manipulatorarm getragenen Werkzeugs fester Punkt sein.

In einer Ausführungsform kann bei dem Robotersteuerungsverfahren wie oben beschrieben, die Position und Orientierung des Basiskoordinatensystems und/oder des Arbeitspunktes durch automatisches Bewegen einer weiteren Zusatzachse verändert werden. Dies bedeutet, dass die Position und Orientierung des Basiskoordinatensystems und/oder des Arbeitspunktes dadurch verändert wird, dass beispielsweise ein Werkstück, zu dem das Basiskoordinatensystems und/oder der Arbeitspunkt fest ist, bewegt wird. Das Werkstück kann beispielsweise dadurch bewegt werden, dass es entweder manuell ummontiert wird, oder durch eine weitere Zusatzachse, die beispielsweise ein Dreh- oder Dreh-Kipp-Tisch sein kann, auf dem das Werkstück fest montiert ist, automatisch bewegt wird. Eine automatische Bewegung kann eine Umorientierung des Werkstücks sein oder eine translatorische Verschiebung, beispielsweise durch eine Linearachse, d.h. einen Fahrwagen, ein Förderband oder Gehänge. Aus der Bewegungsdifferenz der Zusatzachse errechnet sich dann die geänderte Position und/oder Orientierung des verschobenen Basiskoordinatensystems.

In einer weiteren allgemeinen Ausführung kann das Robotersteuerungsverfahren die folgenden weiteren Schritte aufweisen:
- taktweises oder kontinuierliches Vorgeben von Zielwerten eines in Position und Orientierung durch ein Roboterprogramm vorgegebenen, sich bewegenden Bezugspunktes;
- automatisches Anpassen der Bewegungen der Glieder des Manipulators durch Einstellen der Achsen des Manipulators derart, dass eine durch das Roboterprogramm auf den Arbeitspunkt bezogene Bahn, entlang welcher der Werkzeugbezugspunkt des Manipulators sich bewegen soll, während einer Bewegung des Bezugspunktes eingehalten wird;
- automatisches Anpassen der Bewegungen der Glieder des Manipulators durch Einstellen der Achsen des Manipulators derart, dass zur Einhaltung der durch das Roboterprogramm auf den Arbeitspunkt bezogenen Bahn, entlang welcher der Werkzeugbezugspunkt des Manipulators sich bewegen soll, eine automatische Bewegung der Zusatzachse während der Bewegung des Bezugspunktes berücksichtigt wird.

In einer solchen Ausführungsform wird der in Betracht gezogene Bezugspunkt, der entweder der Arbeitspunkt oder der Werkzeugbezugspunkt sein kann, nicht nur einmalig versetzt, wie dies beispielsweise bei einer einmaligen Umgestaltung einer Roboterzelle der Fall wäre. In dieser Ausführungsform kann sich der Bezugspunkt während der Ausführung des Roboterprogramms in Bewegung befinden. Dies ist beispielsweise dann der Fall, wenn sich das Werkstück auf einem kontinuierlich bewegten Förderband am Manipulator vorbeibewegt und während dieser Bewegung des Werkstücks der Manipulator auf das Werkstück roboterprogrammgemäß einwirken soll. In dieser Ausführungsform kann erfindungsgemäß eine Programmierung einer Bewegung der Zusatzachse oder der Zusatzachsen entfallen. Es kann im Roboterprogramm ein fester Wert für den Stellungswert der Zusatzachsen gespeichert sein und gemäß einer der erfindungsgemäßen Ausführungen eine automatische Bewegung der Zusatzachse durch automatisches Ändern des Stellungswertes bei einer eindimensionalen Zusatzachse oder der Stellungswerte bei einer mehrdimensionalen Zusatzachse erreicht werden. Die Zusatzachse wird insoweit nur durch einen achsspezifischen Wert und nicht durch Vorgabe von Position und Orientierung bewegt. Dabei kann die durch das Roboterprogramm auf den Arbeitspunkt bezogene Bahn, entlang welcher der Werkzeugbezugspunkt des Manipulators sich bewegen soll, während einer Bewegung des Arbeitspunktes dadurch eingehalten werden, dass die Bewegungen der Glieder des Manipulators durch Einstellen der Achsen des Manipulators automatisch angepasst werden.

Dabei kann die automatische Bewegung der Zusatzachse synchron zu einer Bewegung des Arbeitspunktes oder Werkzeugbezugspunktes erfolgen. Alternativ kann die automatische Bewegung der Zusatzachse einer Bewegung des Arbeitspunktes oder Werkzeugbezugspunktes vorauseilen oder nachlaufen. So kann sich ein sehr dynamischer Bewegungsablauf ergeben. Optisch kann sich dabei der Eindruck ergeben, dass die Bewegung beispielsweise eines Fahrwagens einer Linearachse bzw. die Bewegung der Roboterbasis in elastischer Weise an die Bewegung des Arbeitspunktes oder an die Bewegung des Werkzeugbezugspunkt des Manipulators gekoppelt ist.

Die Position und/oder Orientierung der Zusatzachse ergibt sich nicht allein aus dem programmierten Stellungswert, sondern aus einer Summe des programmierten Stellungswerts und einem automatisch gemäß einer der erfindungsgemäßen Vorschriften berechneten Stellungswerten oder Stellungsdifferenzwerten. Am Beispiel eines Verfahrwagens einer Linearachse als Zusatzachse, kann beispielsweise der automatisch berechnete Stellungswert des Verfahrwagens, d.h. der Stellungswert der Zusatzachse sich aus einer senkrechten Projektion des Tool-Center-Points (TCP) oder eines Handwurzelpunkts des Manipulators auf die Strecke des möglichen Fahrweges des Verfahrwagens ergeben. Der neue Stellungswert ist dabei der Schnittpunkt der senkrechten Projektion des Tool-Center-Points (TCP) oder eines Handwurzelpunkts auf der Strecke des möglichen Fahrweges der Zusatzachse. Soll nun beispielsweise der Manipulatorarm einem Bauteil auf einem Förderband folgen, so wandert die kartesische Zielposition für die Roboterbasis allein dadurch mit dem Bauteil mit, dass der Tool-Center-Point (TCP) oder der Handwurzelpunkt des Manipulators aufgrund des Roboterprogramms bereits dem Bauteil folgt und der Fahrwagen bzw. die Roboterbasis erfindungsgemäß wiederum diesem Tool-Center-Point (TCP) oder Handwurzelpunkt folgt. Insgesamt folgt dadurch der Fahrwagen bzw. die Roboterbasis dem Bauteil automatisch.

Da eine Zusatzachse im Allgemeinen träger ist, als eine Manipulatorhand, welche durch den Tool-Center-Point (TCP) oder Handwurzelpunkt repräsentiert werden kann, ist in einer Ausführungsform der Erfindung vorgesehen, dass die Zusatzachse, d.h. beispielsweise der Fahrwagen, im aktuellen Interpolationstakt den berechneten Stellungswert nur so weit anfährt, wie es ohne Überschreiten ihrer dynamischen und/oder physikalischen Grenzen möglich ist. Der Weg, den die Zusatzachse, d.h. der Fahrwagen oder die Roboterbasis, dem berechneten Stellungswert hinterherhinkt kann dann, vom wesentlich dynamischeren, Manipulatorarm ausgeglichen werden, insbesondere bis in späteren Interpolationstakten die Zusatzachse wieder Zeit hat, auf den berechneten Stellungswert aufzuholen. Da die Position und/oder Orientierung der Zusatzachse, wie beschrieben, aus dem programmierten Stellungswert und einem errechneten Stellungswert, insbesondere aus dem Stellungswert der senkrechten Projektion berechnet wird, kann es somit sein, dass die Roboterbasis des Manipulators einen Versatz, beispielsweise nach links oder rechts, gegenüber dem idealen Stellungswert aufweist. Mit anderen Worten ausgedrückt, verfolgt die Manipulatorhand das sich bewegende Bauteil bzw. Werkstück und die Zusatzachse, beispielsweise der Fahrwagen einer Linearachse, d.h. die Roboterbasis läuft der Bewegung der Manipulatorhand nach. In gewissen Situationen kann sich jedoch der Effekt einstellen, dass bei einem abrupten Halt des Bauteils und/oder der Manipulatorhand die Zusatzachse über den errechneten Stellungswert hinaus läuft. In späteren Interpolationstakten kann dann die Zusatzachse wieder automatisch zurückgeführt werden.

Eine automatische Änderung der Stellungswerte für die Zusatzachse erfolgt jedoch nur innerhalb des konstruktiv möglichen Arbeitsbereichs der Zusatzachse. Kann also die Zusatzachse den errechneten Stellungswert nicht vollständig einnehmen, wird die Zusatzachse bis in ihre maximale Endstellung gefahren und die noch fehlende Stellungsdifferenz wird durch Anpassen der Pose des Manipulatorarms ausgeglichen. Mit anderen Worten wird dabei der von der Zusatzachse nicht ausführbare Bewegungsanteil durch eine Bewegung des Manipulatorarms kompensiert.

So kann es beispielsweise aus den oben genannten Gründen ausreichend sein, wenn ein erfindungsgemäßes Robotersteuerungsverfahren den Schritt aufweist:
- automatisches Ändern der Stellungswerte der geplanten einzunehmenden Position und Orientierung der durch die Zusatzachse verstellbaren Roboterbasis derart, dass die tatsächlich einzunehmende Position der Roboterbasis gegenüber der geplanten einzunehmenden Position sich dem Werkzeugbezugspunkt des Manipulators annähert oder an den Werkzeugbezugspunkt des Manipulators angenähert ist.

Dies bedeutet, dass die idealen berechneten Stellungswerte von der Zusatzachse nicht stets vollständig erreicht werden müssen. Vielmehr ist es ausreichend, wenn die Zusatzachse sich an den idealen berechneten Stellungswert zumindest annähert. Statisch betrachtet kann dabei in einer erreichten Endstellung der Zusatzachse die tatsächlich eingenommene Position der Roboterbasis lediglich an die geplante einzunehmende Position angenähert sein. Dynamisch betrachtet kann zu jedem Zeitpunkt während einer Bewegung der Zusatzachse die tatsächlich eingenommene Position der Roboterbasis lediglich an die geplante einzunehmende Position sich annähern.

In einer speziellen Ausführungsform des erfindungsgemäßen Robotersteuerungsverfahrens kann das automatische Ändern der Stellungswerte derart erfolgen, dass die tatsächlich einzunehmende Position der Roboterbasis sich in kürzest möglichem Abstand von der momentanen Position des Werkzeugbezugspunktes des Manipulators befindet.

Wird als Bezugspunkt der Werkzeugbezugspunkt des Manipulators gewählt, so kann die tatsächlich einzunehmende Position der Roboterbasis, die sich in kürzest möglichem Abstand von der momentanen Position des Werkzeugbezugspunktes des Manipulators befindet, beispielsweise dadurch bestimmt werden, dass bei einer linear verfahrbaren, eindimensionalen Zusatzachse auf die Gerade des Fahrweges des Zusatzachse, insbesondere aufgrund der in Weltkoordinaten bekannte Lage der Zusatzachse, das Lot gefällt wird und zwar durch den aktuellen Werkzeugbezugspunkt des Manipulators. Der Schnittpunkt des gefällten Lotes mit der rechtwinkelig zum Lot liegenden Geraden des Fahrweges ist dann der Ort für die vom Fahrwagen bzw. der Roboterbasis tatsächlich einzunehmende Position. Eine Bestimmung der tatsächlich einzunehmenden Position ist damit mathematisch sehr einfach möglich, so dass entsprechend in die Robotersteuerung implementierte Algorithmen das Ergebnis sehr schnell berechnen können. Darüber hinaus wird bei bekannten Robotersteuerungen oftmals der aktuelle Werkzeugbezugspunkt des Manipulators bereits in Weltkoordinaten zur Verfügung gestellt, so dass eine gesonderte Transformationsrechnung des Werkzeugbezugspunktes des Manipulators in das Weltkoordinatensystem entfallen kann.

Verschiedene Ausführungsbeispiele der Erfindung sind exemplarisch in den beigefügten schematischen Figuren dargestellt.

Es zeigen:
- Fig. 1: eine symbolische Darstellung eines roboterintegrierten Arbeitsplatzes mit einem Fahrwagen, auf dem ein Manipulatorarm verfahrbar gelagert ist, und mit einem Bauteil, das mittels eines Drehtisches umorientierbar gelagert ist,
- Fig. 2: den roboterintegrierten Arbeitsplatz mit einem gegenüber der Darstellung gemäß Fig. 1 umorientierten Bauteil und dem Manipulatorarm in einer ausgestreckten Stellung,
- Fig. 3: den roboterintegrierten Arbeitsplatz gemäß Fig. 2 mit einem an den Arbeitspunkt bzw. den Werkzeugbezugspunkt angenähertem Fahrwagen,
- Fig. 4: den roboterintegrierten Arbeitsplatz gemäß Fig. 2 mit einem lotrecht unter den Werkzeugbezugspunkt gefahrenem Fahrwagen bzw. unter den Werkzeugbezugspunkt gefahrener Roboterbasis und
- Fig. 5: den roboterintegrierten Arbeitsplatz mit einem in der Ebene verfahrbaren Fahrwagen, der sowohl lotrecht unter den Werkzeugbezugspunkt gefahren, als auch an den Arbeitspunkt angenähert ist.

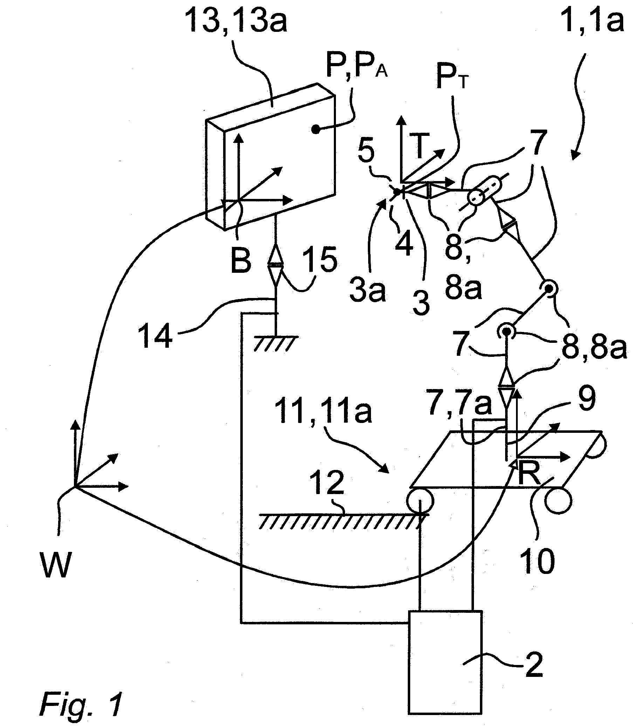

In der Fig. 1 ist ein Manipulator 1 in Form eines Manipulatorarms 1a symbolisch gezeigt, der mit einer Robotersteuerung 2 verbunden ist. In der Robotersteuerung 2 ist ein Roboterprogramm, insbesondere als Programmquelltext hinterlegt. Der Manipulator 1 bildet zusammen mit der Robotersteuerung 2 einen Roboter, der insbesondere ein Industrieroboter sein kann. Die Robotersteuerung 2 ist zum automatisierten Bewegen des Manipulatorarms 1a eingerichtet.

Der Manipulatorarm 1a weist an seinem Endeffektor-Flansch 3 einen Endeffektor 3a, insbesondere in Art eines Greifers auf. Der Endeffektor 3a kann insoweit speziell auch als Greifer bezeichnet werden. Der dargestellte Endeffektor 3a kann beispielsweise zwei gegeneinander bewegliche Greiferbacken 4 und 5 aufweisen. Der Manipulatorarm 1a weist Glieder 7 auf, die durch Gelenke 8 miteinander verbunden sind. Durch Bewegen der Gelenke 8 des Manipulatorarms 1a wird der Endeffektor 3a bewegt. Die Gelenke 8 bilden Achsen 8a des Manipulators 1.

Das erste Glied 7a des Manipulatorarms 1a kann eine Roboterbasis 9 bilden. Die Roboterbasis 9 ist mit einem Fahrwagen 10 einer Linearachse 11a verbunden. Fest bezüglich der Roboterbasis 9 ist ein Roboterkoordinatensystem R definiert, das über ein Weltkoordinatensystem W beschrieben werden kann. Der Fahrwagen 10 ist dazu auf einem Gestell 12, das Schienen aufweisen kann, linear verschiebbar gelagert. Gestell 12 und Fahrwagen 10 bilden eine Zusatzachse 11 des roboterintegrierten Arbeitsplatzes.

Ein Werkstück 13 und/oder ein Werkstückträger 13a ist auf einer weiteren Zusatzachse 14 des roboterintegrierten Arbeitsplatzes verstellbar belagert. Die Zusatzachse 14 ist im dargestellten Ausführungsbeispiel als ein Drehtisch mit einer Drehachse 15 ausgebildet. Sowohl die Zusatzachse 11 als auch die Zusatzachse 14 ist im dargestellten Ausführungsbeispiel durch die Robotersteuerung 2 angesteuert.

Im dargestellten Ausführungsbeispiel wird ein vorbestimmter Bezugspunkt P durch einen Arbeitspunkt P_{A} auf dem Werkstück 13 repräsentiert. Gemäß einem beispielhaften Roboterprogramm soll nun der Bezugspunkt P bzw. der Arbeitspunkt durch den Endeffektor 3a des Manipulatorarms 1a angefahren werden. Dazu ist dem Endeffektor 3a ein Werkzeugbezugspunkt P_{T} zugeordnet, in dem gleichzeitig auch der Ursprung eines Werkzeugkoordinatensystems T liegt. Dem Werkstück 13 ist außerdem ein zum Werkstück 13 festes Basiskoordinatensystem B zugeordnet. Position und Orientierung des Basiskoordinatensystems B und des Werkzeugkoordinatensystems T können bezüglich eines fest vorgegebenen Weltkoordinatensystems W beschrieben sein. Alternativ oder ergänzend können Position und Orientierung des Basiskoordinatensystems B auch im Werkzeugkoordinatensystem T oder einem Flanschkoordinatensystem des Roboters beschrieben sein. Das Flanschkoordinatensystem kann dabei insbesondere fest bezüglich des Werkzeugkoordinatensystems T definiert sein.

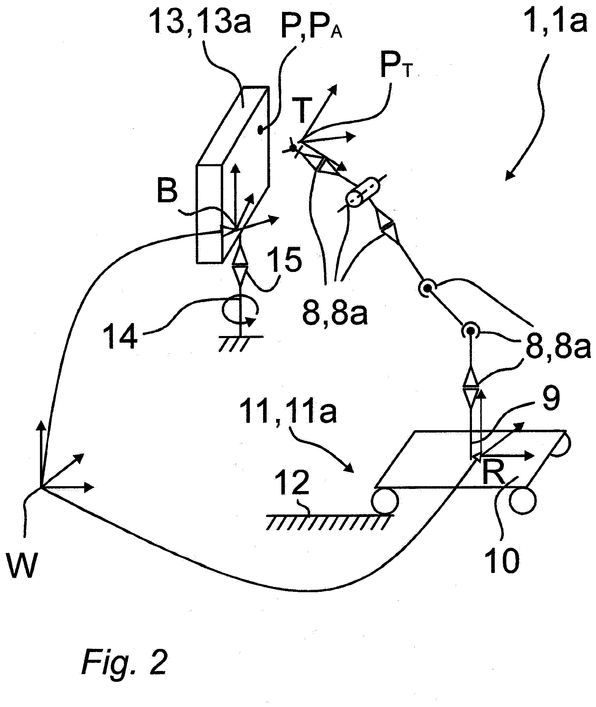

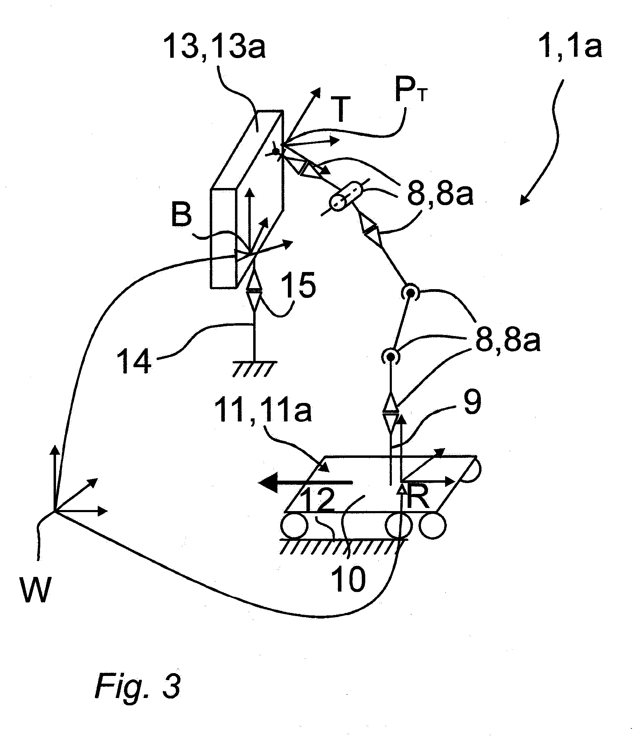

In der Fig. 2 ist nun schematisch angedeutet, wie der Manipulator 1 versucht durch Verstellen seiner Achsen 8, 8a den Arbeitspunkt P_{A} mit seinem Endeffektor 3a zu erreichen bzw. seinen Werkzeugbezugspunkt P_{T} an den Arbeitspunkt P_{A} anzunähern. Entweder ist, wie im dargestellten Ausführungsbeispiel angedeutet, nur durch extreme Streckung der Gelenke 8 des Manipulators 1 möglich, oder nur teilweise möglich, so dass beispielsweise der Arbeitspunkt P_{A} von dem Endeffektor 3a überhaupt nicht erreichbar ist. In solchen Fällen kann durch das erfindungsgemäße Robotersteuerungsverfahren trotz fester Programmierung des Stellungswertes oder der Stellungswerte der Zusatzachse 11, d.h. des Fahrwagens 10, die Roboterbasis 9 automatisch an den vorbestimmten Bezugspunkt P, insbesondere an den Arbeitspunkt P_{A} oder an den Werkzeugbezugspunkt P_{T} angenähert werden, so dass dieser durch den Endeffektor 3a bzw. den Werkzeugbezugspunkt P_{T} leichter, d.h. mit günstigeren Achsstellungen des Manipulatorarms 1a oder überhaupt erst erreichbar ist, wie dies in Fig. 3 schematisch dargestellt ist.

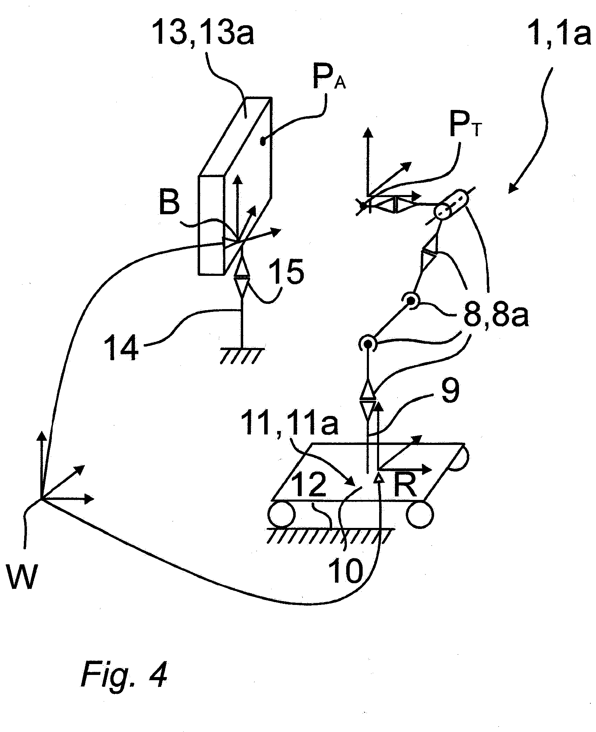

In einer abgewandelten Ausführungsform der Erfindung kann, wie in Fig. 4 schematisch angedeutet, ein automatisches Ändern der Stellungswerte der Roboterbasis 9 derart erfolgen, dass als vorbestimmter Bezugspunkt P nicht der Arbeitspunkt P_{A}, sondern der Werkzeugbezugspunkt P_{T} herangezogen wird. Dabei nähert sich die Roboterbasis 9 nicht an den Arbeitspunkt P_{A}, sondern an den Werkzeugbezugspunkt P_{T} an. Durch ein solches Robotersteuerungsverfahren wird die Roboterbasis 9 durch den Fahrwagen 10 der Zusatzachse 11 mehr oder weniger stets unter den Werkzeugbezugspunkt P_{T} bzw. unter den Endeffektor 3a gefahren.

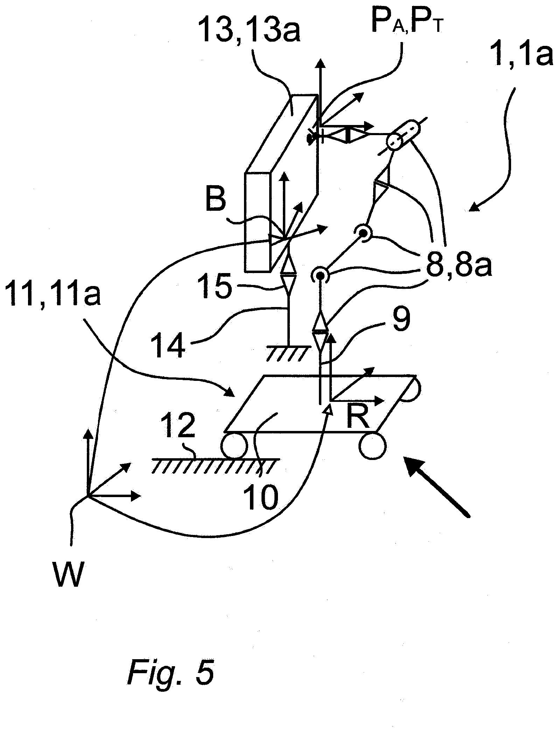

In der Fig. 5 ist aufgezeigt, dass die Zusatzachse 11 nicht nur, wie in den Fig. 1 bis Fig. 4 angedeutet, eine eindimensionale Zusatzachse 11 sein kann, sondern, wie in Fig. 5 durch den Pfeil angedeutet, auch eine zweidimensionale Zusatzachse 11 bilden kann. So kann beispielsweise die zweidimensionale Zusatzachse 11 eine Fahrplattform, insbesondere ein omnidirektionales Fahrwerk sein. In dieser Ausführungsform kann ein automatisches Ändern der Stellungswerte der Roboterbasis 9 auch derart erfolgen, dass als vorbestimmter Bezugspunkt P ein sowohl nahe des Arbeitspunkts P_{A}, als auch nahe des Werkzeugbezugspunkts P_{T} liegender Punkt herangezogen wird. In dieser Ausführungsform kann jedoch auch lediglich der Arbeitspunkts P_{A} oder der Werkzeugbezugspunkts P_{T} als vorbestimmter Bezugspunkt P herangezogen werden.

## Patentansprüche

1. Robotersteuerungsverfahren aufweisend die folgenden Schritte:
- Vorgeben von Zielwerten eines in Position und Orientierung durch ein Roboterprogramm vorgegebenen Arbeitspunktes(P_{A}), in dessen programmierter Abhängigkeit ein Werkzeugbezugspunkt (P_{T}) eines Manipulators (1) durch automatisches Bewegen von Achsen (8a) des Manipulators (1) durch eine mit dem Manipulator (1) verbundene Robotersteuerung (2) einzustellen ist; **gekennzeichnet durch**
- Ausgehend von durch das Roboterprogramm vorgegebenen, einer geplanten einzunehmenden Position und Orientierung entsprechenden Stellungswerten einer durch eine Zusatzachse (11, 14) verstellbaren Roboterbasis (9), wobei die Stellungswerte auf einen Nullpunkt der Zusatzachse (11, 14) bezogen sind, automatisches Ändern des Nullpunktes der Zusatzachse (11, 14) derart, dass eine tatsächlich einzunehmende Position der Roboterbasis (9) an den Arbeitspunkt (P_{A}) angenähert ist;
- automatisches Bewegen der Zusatzachse (11, 14) derart, dass die Roboterbasis (9) die Position und Orientierung einnimmt, die den vorgegebenen Stellungswerten und dem geänderten Nullpunkt entspricht;
- wobei der Nullpunkt der Zusatzachse derart automatisch geändert wird, dass die tatsächlich einzunehmende Position der Roboterbasis (9) an einen Arbeitspunkt (P_{A}), der ein gegenüber dem durch das Roboterprogramm vorgegebenen Arbeitspunkt geänderter Arbeitspunkt (P_{A}) ist, der mit den durch das Roboterprogramm vorgegebenen Stellungswerten nicht mehr durch den Manipulator erreicht werden kann, dadurch angenähert wird, dass die vorgegebenen Stellungswerte einer geplanten einzunehmenden Position und Orientierung der durch die Zusatzachse (11, 14) verstellbaren Roboterbasis (9) beibehalten werden;
- auf Grundlage der Stellungswerte der Position und Orientierung der Roboterbasis (9) und auf Grundlage der durch das Roboterprogramm vorgegebenen Zielwerte des vorgegebenen Arbeitspunkts (P_{A}), automatisches Rückrechnen von Achswerten der Achsen (8a) des Manipulators (1), die den Stellungswerten der Roboterbasis (9) und in Abhängigkeit des Bezugspunktes (P) programmierten Anfahrwerten des Werkzeugbezugspunktes (P_{T}) entsprechen; und
- Bewegen von Gliedern (7) des Manipulators (1) durch Einstellen der Achsen (8a) des Manipulators (1) auf die rückgerechneten Achswerte mittels der mit dem Manipulator (1) verbundenen Steuerungsvorrichtung (2).

2. Robotersteuerungsverfahren nach Anspruch 1, mit den weiteren Schritten:
- taktweises oder kontinuierliches Vorgeben von Zielwerten eines in Position und Orientierung durch ein Roboterprogramm vorgegebenen, sich bewegenden Bezugspunktes (P), insbesondere eines Arbeitspunkts (P_{A}) oder eines Werkzeugbezugspunkts (P_{T});
- automatisches Anpassen der Bewegungen der Glieder (7) des Manipulators (1) durch Einstellen der Achsen (8a) des Manipulators (1) derart, dass eine durch das Roboterprogramm auf den Arbeitspunkt (P_{A}) bezogene Bahn, entlang welcher der Werkzeugbezugspunkt (P_{T}) des Manipulators (1) sich bewegen soll, während einer Bewegung des Bezugspunktes (P) eingehalten wird;
- automatisches Anpassen der Bewegungen der Glieder (7) des Manipulators (1) durch Einstellen der Achsen (8a) des Manipulators (1) derart, dass zur Einhaltung der durch das Roboterprogramm auf den Arbeitspunkt (P_{A}) bezogenen Bahn, entlang welcher der Werkzeugbezugspunkt (P_{T}) des Manipulators (1) sich bewegen soll, eine automatische Bewegung der Zusatzachse (11, 14) während der Bewegung des Arbeitspunktes (P_{A}) berücksichtigt wird.

3. Robotersteuerungsverfahren nach einem der Ansprüche 1 oder 2, bei dem die automatische Bewegung der Zusatzachse (11, 14) synchron zu einer Bewegung des Arbeitspunktes (P_{A}) oder Werkzeugbezugspunktes (P_{T}) erfolgt.

4. Robotersteuerungsverfahren nach einem der Ansprüche 1 oder 2, bei dem die automatische Bewegung der Zusatzachse (11, 14) einer Bewegung des Arbeitspunktes (P_{A}) oder Werkzeugbezugspunktes (P_{T}) vorauseilt.

5. Robotersteuerungsverfahren nach einem der Ansprüche 1 oder 2, bei dem die automatische Bewegung der Zusatzachse (11, 14) einer Bewegung des Arbeitspunktes (P_{A}) oder Werkzeugbezugspunktes (P_{T}) nachläuft.

6. Robotersteuerungsverfahren nach Anspruch 4 oder 5, bei dem die durch das Roboterprogramm auf den Arbeitspunkt (P_{A}) oder Werkzeugbezugspunktes (P_{T}) bezogene Bahn, entlang welcher der Werkzeugbezugspunkt (P_{T}) des Manipulators (1) sich bewegen soll, während einer Bewegung des Arbeitspunktes (P_{A}) dadurch eingehalten wird, dass die Bewegungen der Glieder (7) des Manipulators (1) durch Einstellen der Achsen (8a) des Manipulators (1) automatisch angepasst werden.

7. Robotersteuerungsverfahren nach einem der Ansprüche 1 bis 6, mit dem weiteren Schritt:
- automatisches Ändern des Nullpunkts der geplanten einzunehmenden Position und Orientierung der durch die Zusatzachse (11) verstellbaren Roboterbasis (9) derart, dass die tatsächlich einzunehmende Position der Roboterbasis (9) sich dem Werkzeugbezugspunkt (P_{T}) des Manipulators (1) annähert oder an den Werkzeugbezugspunkt (P_{T}) des Manipulators (1) angenähert ist.

8. Robotersteuerungsverfahren nach Anspruch 7, bei dem das automatische Ändern des Nullpunkts derart erfolgt, dass die tatsächlich einzunehmende Position der Roboterbasis (9) sich in kürzest möglichem Abstand von der momentanen Position des Werkzeugbezugspunktes (P_{T}) des Manipulators (1) befindet.

9. Robotersteuerungsverfahren zur rechnergestützten Implementierung eines Robotersteuerungsverfahrens nach einem der Ansprüche 1 bis 8, aufweisend die folgenden Schritte:
- Vorgeben eines Weltkoordinatensystems (W);
- Vorgeben einer Position und Orientierung eines werkstückgebundenen Basiskoordinatensystems (B) eines Werkstücks (13) in Weltkoordinaten des Weltkoordinatensystems (W);
- Vorgeben der Zielwerte in Basiskoordinaten des Basiskoordinatensystems (B);
- Vorgeben einer Position und Orientierung eines roboterbasisgebundene Roboterkoordinatensystems (R) des Manipulators (1) in Weltkoordinaten des Weltkoordinatensystems (W) in Abhängigkeit einer Position und Orientierung der durch die Zusatzachse (11) verstellbaren Roboterbasis (9);
- automatisches Rückrechnen der Achswerte der Achsen (8a) des Manipulators (1), aus der Position und Orientierung der Roboterbasis (9) und der Zielwerte für die Position und Orientierung des Werkzeugbezugspunktes (P_{T}) des Manipulators (1) auf Grundlage einer Transformation der Zielwerte aus dem Basiskoordinatensystems (B) über das Weltkoordinatensystem (W) in das Roboterkoordinatensystem (R).

10. Robotersteuerungsverfahren nach Anspruch 9, bei dem die Position und Orientierung des Basiskoordinatensystems (B) und/oder des Arbeitspunktes (P_{A}) durch automatisches Bewegen einer weiteren Zusatzachse (14) verändert wird.

## Claims

1. Robot control method comprising the following steps:
- Presetting of target values of a working point (P_{A}) predetermined in position and orientation by a robot program, in which programmed dependence a tool reference point (P_{T}) of a manipulator (1) is set by automatic movement of axes (8a) of the manipulator (1) by a robot controller (2) connected to the manipulator (1), **characterized by**
- on the basis of position values of a robot base (9) which can be adjusted by an auxiliary axis (11, 14) and which are predetermined by the robot program and which correspond to a planned position and orientation to be reached, whereby the position values being related to a zero point of the auxiliary axis (11, 14), automatically changing the zero point of the auxiliary axis (11, 14) in such a way that a position of the robot base (9) which is actually to be reached is approximated to the working point (P_{A}),
- automatically moving the auxiliary axis (11, 14) in such a way that the robot base (9) adopts the position and orientation corresponding to the predetermined position values and the changed zero point,
- wherein the zero point of the auxiliary axis is automatically changed in such a way that the actual position to be reached by the robot base (9) is approximated to a working point (P_{A}) by maintaining the predetermined position values of a planned position and orientation of the robot base (9) to be reached, which is adjustable by the auxiliary axis (11, 14), whereby the working point (P_{A}) is a modified working point (P_{A}) compared to the operating point predetermined by the robot program, which can no longer be reached by the manipulator based on the position values predetermined by the robot program,
- based on the position values of the position and orientation of the robot base (9) and based on the target values of the specified working point (P_{A}) predetermined by the robot program, automatically back-calculating of axis values of the axes (8a) of the manipulator (1) corresponding to the position values of the robot base (9) and to approach values of the tool reference point (P_{T}) programmed as a function of the reference point (P), and
- moving the links (7) of the manipulator (1) by adjusting the axes (8a) of the manipulator (1) to the back-calculated axis values by means of the control device (2) connected to the manipulator (1).

2. Robot control method of claim 1, further comprising the steps:
- cyclic or continuous presetting of target values of a moving reference point (P), in particular a working point (P_{A}) or a tool reference point (P_{T}), whose position and orientation are preset by a robot program,
- automatically adapting the movements of the links (7) of the manipulator (1) by adjusting the axes (8a) of the manipulator (1) in such a way that a path related by the robot program to the working point (P_{A}), along which the tool reference point (P_{T}) of the manipulator (1) is to move, is maintained during a movement of the reference point (P),
- automatically adapting the movements of the links (7) of the manipulator (1) by adjusting the axes (8a) of the manipulator (1) in such a way that, in order to maintain the trajectory referred to the working point (P_{A}) by the robot program, along which the tool reference point (P_{T}) of the manipulator (1) is to be move, an automatic movement of the auxiliary axis (11, 14) is taken into account during the movement of the working point (P_{A}).

3. Robot control method according to one of claims 1 or 2, wherein the automatic movement of the auxiliary axis (11, 14) is synchronized with a movement of the working point (P_{A}) or tool reference point (P_{T}).

4. Robot control method according to one of claims 1 or 2, wherein the automatic movement of the auxiliary axis (11, 14) precedes a movement of the working point (P_{A}) or tool reference point (P_{T}).

5. Robot control method according to one of claims 1 or 2, wherein the automatic movement of the auxiliary axis (11, 14) follows a movement of the working point (P_{A}) or tool reference point (P_{T}).

6. Robot control method according to claim 4 or 5, wherein the trajectory related to the working point (P_{A}) or tool reference point (PT) by the robot program, along which trajectory the tool reference point (P_{T}) of the manipulator (1) is to move, is maintained during a movement of the working point (P_{A}) by automatically adjusting the movements of the links (7) of the manipulator (1) by adjusting the axes (8a) of the manipulator (1).

7. Robot control method according to one of claims 1 to 6, comprising the further step:
- automatically changing the zero point of the planned position and orientation to be reached of the robot base (9) adjustable by the auxiliary axis (11) in such a way that the actual position of the robot base (9) to be reached approaches the tool reference point (P_{T}) of the manipulator (1) or is approximated to the tool reference point (P_{T}) of the manipulator (1).

8. Robot control method according to claim 7, wherein the automatically changing of the zero point is performed in such a way that the actual position of the robot base (9) to be reached is at the shortest possible distance from the current position of the tool reference point (P_{T}) of the manipulator (1).

9. Robot control method for computer-assisted implementation of a robot control method according to one of claims 1 to 8, comprising the following steps:
- Specifying a world coordinate system(W,
- Presetting a position and orientation of a workpiece-bound base coordinate system (B) of a workpiece (13) in world coordinates of the world coordinate system (W),
- Presetting the target values in base coordinates of the base coordinate system (B),
- Presetting a position and orientation of a robot base-bound robot coordinate system (R) of the manipulator (1) in world coordinates of the world coordinate system (W) as a function of a position and orientation of the robot base (9) adjustable by the auxiliary axis (11),
- automatically back-calculating the axis values of the axes (8a) of the manipulator (1), from the position and orientation of the robot base (9) and the target values for the position and orientation of the tool reference point (P_{T}) of the manipulator (1) on the basis of a transformation of the target values from the base coordinate system (B) via the world coordinate system (W) into the robot coordinate system (R).

10. Robot control method according to claim 9, in which the position and orientation of the base coordinate system (B) and/or of the working point (P_{A}) is changed by automatically moving a further additional axis (14).

## Revendications

1. Procédé de commande de robot comprenant les étapes suivantes :
- prédéterminer des valeurs cibles d'un point de fonctionnement (P_{A}) prédéterminé en position et en orientation par un programme de robot, en fonction duquel un point de référence de l'outil (P_{T}) d'un manipulateur (1) doit être réglé par un déplacement automatique d'axes (8a) du manipulateur (1) par une commande de robot (2) connectée au manipulateur (1) ; **caractérisé par** les étapes suivantes :
- à partir de valeurs de position, d'une base de robot (9) réglable par un axe supplémentaire (11, 14), prédéterminées par le programme de robot et correspondant à une position et une orientation prévues devant être prises, les valeurs de position se référant à un point zéro de l'axe supplémentaire (11, 14), modifier automatiquement le point zéro de l'axe supplémentaire (11, 14) de telle sorte qu'une position de la base de robot (9) devant effectivement être prise est rapprochée du point de fonctionnement (P_{A}) ;
- déplacer automatiquement l'axe supplémentaire (11, 14) de manière à ce que la base du robot (9) prenne la position et l'orientation qui correspondent aux valeurs de position prédéterminées et au point zéro modifié ;
- dans lequel le point zéro de l'axe supplémentaire est automatiquement modifié de telle sorte que la position réelle, devant être prise par la base du robot (9), est rapprochée d'un point de fonctionnement (P_{A}), qui est un point de fonctionnement (P_{A}) modifié par rapport au point de fonctionnement prédéterminé par le programme du robot et qui ne peut plus être atteint par le manipulateur avec les valeurs de position prédéterminées par le programme du robot, par le fait que les valeurs de position prédéterminées d'une position et d'une orientation prévues, devant être prises, de la base de robot (9) réglable par l'axe supplémentaire (11, 14), sont maintenues ;
- sur la base des valeurs de position de la position et de l'orientation de la base du robot (9) et sur la base des valeurs cibles prédéterminées par le programme du robot, du point de fonctionnement (P_{A}) prédéterminé, recalculer automatiquement des valeurs d'axe des axes (8a) du manipulateur (1) qui correspondent aux valeurs de position de la base de robot (9) et aux valeurs d'approche du point de référence de l'outil (P_{T}) programmées en fonction du point de référence (P) ; et
- déplacer des membres (7) du manipulateur (1) en réglant les axes (8a) du manipulateur (1) sur les valeurs d'axe recalculées au moyen du dispositif de commande (2) relié au manipulateur (1).

2. Procédé de commande de robot selon la revendication 1, comprenant les étapes additionnelles suivantes :
- prédéterminer de manière cyclique ou continue des valeurs cibles d'un point de référence (P) qui se déplace et dont la position et l'orientation sont prédéterminées par un programme de robot, en particulier d'un point de fonctionnement (P_{A}) ou d'un point de référence de l'outil (P_{T}),
- adapter automatiquement les déplacements des membres (7) du manipulateur (1) par réglage des axes (8a) du manipulateur (1) de telle sorte qu'une trajectoire, liée au point de fonctionnement (P_{A}) par le programme du robot, le long de laquelle le point de référence de l'outil (P_{T}) du manipulateur (1) doit se déplacer, est maintenue pendant un déplacement du point de référence (P) ;
- adapter automatiquement les déplacements des membres (7) du manipulateur (1) par réglage des axes (8a) du manipulateur (1) de telle sorte que pour maintenir la trajectoire liée au point de fonctionnement (P_{A}) par le programme du robot, le long de laquelle le point de référence de l'outil (P_{T}) du manipulateur (1) doit se déplacer, un déplacement automatique de l'axe supplémentaire (11, 14) est pris en compte pendant le déplacement du point de fonctionnement (P_{A}).

3. Procédé de commande de robot selon l'une quelconque des revendications 1 ou 2, dans lequel le déplacement automatique de l'axe supplémentaire (11, 14) est synchrone avec un déplacement du point de fonctionnement (P_{A}) ou du point de référence de l'outil (P_{T}).

4. Procédé de commande de robot selon l'une des revendications 1 ou 2, dans lequel le déplacement automatique de l'axe supplémentaire (14) précède un déplacement du point de fonctionnement (P_{A}) ou du point de référence de l'outil (P_{T}).

5. Procédé de commande de robot selon l'une des revendications 1 ou 2, dans lequel le déplacement automatique de l'axe supplémentaire (11, 14) suit un déplacement du point de fonctionnement (P_{A}) ou du point de référence de l'outil (P_{T}).

6. Procédé de commande de robot selon la revendication 4 ou 5, dans lequel la trajectoire liée au point de fonctionnement (P_{A}) ou au point de référence de l'outil (P_{T}), le long de laquelle le point de référence de l'outil ( P_{T}) du manipulateur (1) doit se déplacer, est maintenu pendant un déplacement du point de fonctionnement (P_{A}) en adaptant automatiquement les déplacements des membres (7) du manipulateur (1) par réglage des axes (8a) du manipulateur (1).

7. Procédé de commande de robot selon l'une quelconque des revendications 1 à 6, comprenant l'étape supplémentaire suivante :
- modifier automatiquement le point zéro de la position et de l'orientation prévues qui doivent être prises, de la base du robot (9) réglable par l'axe supplémentaire (11), de telle sorte que la position réelle de la base de robot (9) qui doit être prise, s'approche ou est rapprochée du point de référence de l'outil (P_{T}) du manipulateur (1).

8. Procédé de commande de robot selon la revendication 7, dans lequel la mdification automatique du point zéro est effectué de telle sorte que la position réelle de la base de robot (9), qui doit être prise, se trouve à la distance la plus courte possible de la position momentanée du point de référence de l'outil (P_{T}) du manipulateur (1).

9. Procédé de commande de robot pour la mise en œuvre assistée par ordinateur d'un procédé de commande de robot selon l'une quelconque des revendications 1 à 8, comprenant les étapes suivantes :
- prédéterminer un système de coordonnées mondial (W) ;
- prédéterminer une position et une orientation d'un système de coordonnées de base (B), lié à une pièce à usiner, d'une pièce à usiner (13), dans les coordonnées mondiales du système de coordonnées mondial (W) ;
- prédéterminer des valeurs cibles dans les coordonnées de base du système de coordonnées de base (B) ;
- prédéterminer une position et une orientation d'un système de coordonnées de robot (R), lié à une base de robot, du manipulateur (1), dans les coordonnées mondiales du système de coordonnées mondial (W) en fonction d'une position et d'une orientation de la base de robot (9) réglable par l'axe supplémentaire (11) ;
- recalcul automatique des valeurs d'axe des axes (8a) du manipulateur (1) à partir de la position et de l'orientation de la base de robot (9) et des valeurs cibles pour la position et l'orientation du point de référence de l'outil (P_{T}) du manipulateur (1), sur la base d'une transformation des valeurs cibles du système de coordonnées de base (B) via le système de coordonnées mondial (W) dans le système de coordonnées du robot (R).

10. Procédé de commande de robot selon la revendication 9, dans lequel la position et l'orientation du système de coordonnées de base (B) et/ou du point de fonctionnement (P_{A}) sont modifiées en déplaçant automatiquement un autre axe supplémentaire (14).
